# EUROPEAN PATENT SPECIFICATION

(11) **EP 0 463 670 B1**
(45) Date of publication and mention of the grant of the patent: **13.03.1996**
(21) Application number: 91201479.2
(22) Date of filing: 14.06.1991
(51) Int. Cl.: A01C 17/00

(54) **Am implement for dosing material**
Gerät zur Dosierung von Material
Dispositif pour le posage de matière

(30) Priority: 18.06.1990 NL 9001380
(43) Date of publication of application: 02.01.1992
(73) Proprietor: C. van der Lely N.V., NL-3155 PD Maasland (NL)
(72) Inventor: Bom, Cornelis Johannes Gerardus, NL-3181 VC Rozenburg (NL); van der Waal, Pieter Jacob, NL-3145 LB Maassluis (NL)
(74) Representative: Mulder, Herman

(56) References cited:
- EP-A- 0 309 062
- DE-B- 1 284 678
- FR-A- 2 595 900

## Description

The invention relates to an implement for dosing material, such as liquid, granular and/or pulverulent material, which implement comprises at least one hopper for the material to be dosed, which hopper includes a discharge aperture with associated closing member, by means of which the discharge aperture can be opened to a greater or lesser extent, as well as an adjusting mechanism for setting the size of the discharge aperture, the adjusting mechanism comprising a rod system, connected to the closing member, an adjusting member controlling said rod system and means for providing that the play in the adjusting mechanism does not affect the setting of the size of the discharge aperture.

An implement of the above-defined type is known from FR-A-2 595 900.

In general with such implements, in actual practice it is difficult to adjust the size of the discharge aperture accurately. The cause may be the presence of play in the adjusting mechanism, or play arising when the number of operating hours of the implement increases. This play may cause difference between the desired (adjusted) setting of the size of the discharge aperture and the actual one. In the above-mentioned French patent application, play in the adjusting mechanism is prevented, owing to the fact that in the rod system there is incorporated a spring, that keeps the rod system in one direction under tension. A tension spring has the disadvantage that the adjusting member via the rod system is kept under permanent tension. Especially when an electric actuator is used to control the adjusting mechanism, a permanently counteracting force has to be applied to compensate the spring tension.

The invention has for its object to provide a material dosing implement, wherein the effect of play on the accuracy is obviated in a different way as described above. To that end, the implement of the above-defined type is characterized in that said means are provided with a control member which, in response to a desired size of the discharge aperture, causes the length of the adjusting member to be changed in order to bring the closing member in a position wherein the size of the discharge aperture corresponds with the desired size thereof, whereby, when the change of length is performed in a first direction without changing said direction no compensation of the play in the adjusting mechanism takes place and, when the change of length is performed in a second, opposite direction, the length adjustment in said opposite direction is enlarged with a predetermined value, greater than or at least equal to the maximum allowable play in the adjusting mechanism, followed by a length adjustment in the first direction corresponding with said predetermined value.

Particularly the value indicating the maximum allowable play is fed into the control member.

In an embodiment in accordance with the invention, the maximum allowable play is 5 mms. In addition, in accordance with a still further feature of the invention, in the control member there is stored the relation between the number of operating hours and the anticipated play in the adjusting mechanism, whereby on basis of this relation the control member adapts the maximum allowable play value according to the number of operating hours.

In a particular embodiment in accordance with the invention, the memory contains reference points, with the aid of which the computer calculates a ratio, in order that a graduation present in the computer memory for the size of the discharge aperture to be set agrees with a graduation present on the implement and to be adjusted mechanically.

For a better understanding of the invention and to show how the same may be carried into effect, reference will now be made, by way of example, to the accompanying drawings of an embodiment in accordance with the invention, in which drawings:
Figure 1 is a side view of an implement in accordance with the invention;
Figure 2 is a front view of the implement of Figure 1, taken in the direction of the arrow II in Figure 1;
Figure 3 shows, to an enlarged scale, a portion of the implement of Figure 1, taken on the line III-III in Figure 1;
Figure 4 is a side elevational view of the portion shown in Figure 3, taken in the direction of the arrow IV in Figure 3, and
Figure 5 shows, to an enlarged scale, a portion of the adjusting member shown in a side view in Figure 1, a computer coupled to the adjusting member also being shown.

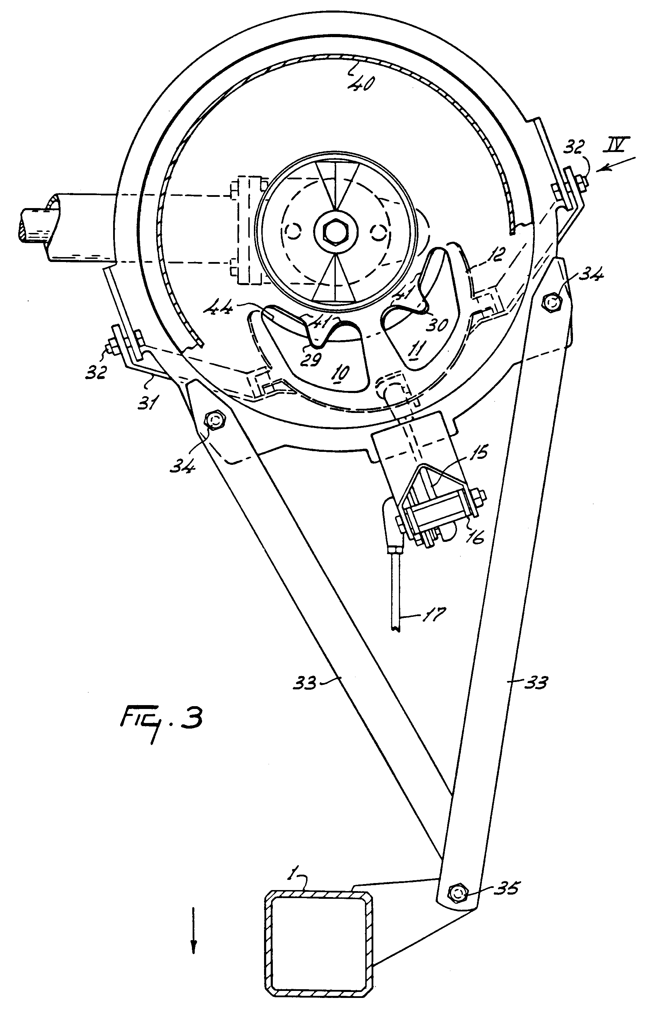

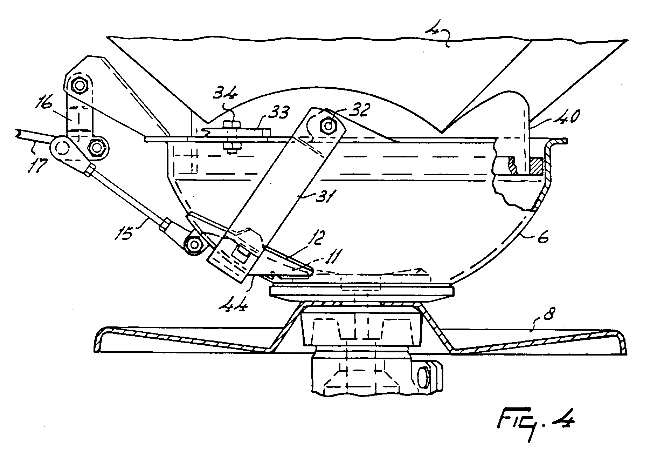

In the embodiment, the implement in accordance with the invention is shown as a spreader which, during operation, can be moved over the field and is used in particular for spreading material over agricultural fields. The implement comprises a frame 1 having attached thereto a hopper 2. The hopper 2 includes two discharge nozzles 3 and 4. The lower ends of the discharge nozzles are fitted with discharge members 5 and 6, respectively, which are identical to each other but are of a symmetrical shape with respect to the centre plane of the implement. The discharge member 6 is shown in greater detail in Figures 3 and 4. Respective spreader members 7 and 8 are provided under each of the discharge members 5 and 6. These spreader members 7 and 8 are also designed and disposed symmetrically relative to the centre plane. The spreader members 7 and 8 are provided in the implement capably of rotation about upwardly extending axes of rotation. The hopper 2 and the spreader members 7 and 8 are supported by the frame 1 which is provided with coupling members 9, by means of which the implement can be coupled to the lifting hitch of a tractor or a similar suchlike vehicle.

As is shown in Figure 3 for the discharge member 5, each of the discharge members 5 and 6 has two discharge apertures 10 and 11. Against the outside of each of the discharge members 5 and 6 there is arranged a closing member in the form of a dosing slide 12, by means of which the discharge apertures 10 and 11 of the relevant discharge member can optionally be closed to a greater or lesser extent. By means of a coupling member 13 consisting of pivotably interconnected rods or arms which are also arranged pivotably with respect to the frame, the dosing slide 12 is coupled to an adjusting member 14, which adjusting member is shown in further detail in Figure 5.

The coupling member 13 includes a coupling arm 15, the one end of which is connected pivotably to the dosing slide 12 and the other end is connected pivotably to a coupling arm 17 via an arm 16. The arm 16 is arranged pivotably at a support secured to the upper side of the discharge member 6. The coupling arm 17 is connected pivotably to an arm 18 which is fitted to a horizontal shaft 19. The shaft 19 is provided on the frame in such a manner so as to be pivotable about its longitudinal axis. The adjusting member 14 has one end connected via a horizontal pivot shaft 21 to an arm 20, which is fitted on the horizontal shaft 19. The other end of the adjusting member 14 is connected to the frame 1 by means of a horizontal pivot shaft 22. A clamping member 42 rigidly couples the pivot shaft 22 to a frame beam of the frame 1. The pivot shaft 22 is movable along the frame beam by means of the clamping member 42. To allow this displacement, the clamping member can be loosened from the frame beam, be shifted relative thereto and thereafter be tightened again. The adjusting member 14 can be controlled by means of a computer 23. To that end, the adjusting member is connected to the computer 23 via a, preferably, flexible cable connection 43.

At the end of the horizontal shaft 19 there is arranged an arm 24. The end of the arm 24 is located in a slotted aperture formed between a plate 25 attached to the frame 1 and a guide strip 26 which is spaced from the plate and connected thereto. Apertures 27, which are in alignment, have been made in the plate 25 and in the strip 26. A stop pin 28 can optionally be passed through one of the apertures 27 in the plate 25 and in the strip 26. The stop pin 28 constitutes an adjustable stop for the arm 24.

The discharge members 5 and 6 are of a bowl-shaped design, as is shown in particular in Figure 4. The discharge members 5 and 6 have their upper ends arranged with some clearance about the cylindrical lower ends 40 of the discharge nozzles 3 and 4. Seen in plan view (Figure 3), the bottom edges 41 of the discharge apertures 10 and 11 are positioned on a tongue 29 or 30, respectively, which extends concentrically and upwardly (away from the discharge member shaft). The dosing slide 12 is slightly larger than the total surface area through which the discharge apertures 10 and 11 extend. Consequently, the dosing slide can cover the two discharge apertures 10 and 11 in the desired manner to a greater or lesser extent. The dosing slide 12 is coupled in such a manner to a bracket 31 that it is movable in a slightly flexible manner. The ends of the bracket 31 are provided capably of rotation about aligned pivot shafts 32, which are mounted on the upper edge of the discharge member 6.

The discharge members 5 and 6 are kept in position around the lower ends 40 of the discharge nozzles by means of strips 33. The strip 33 have one end bolted by means of bolts 34 to the upper edge of the discharge members 5, 6 and the other end to the frame 1 by means of bolts 35.

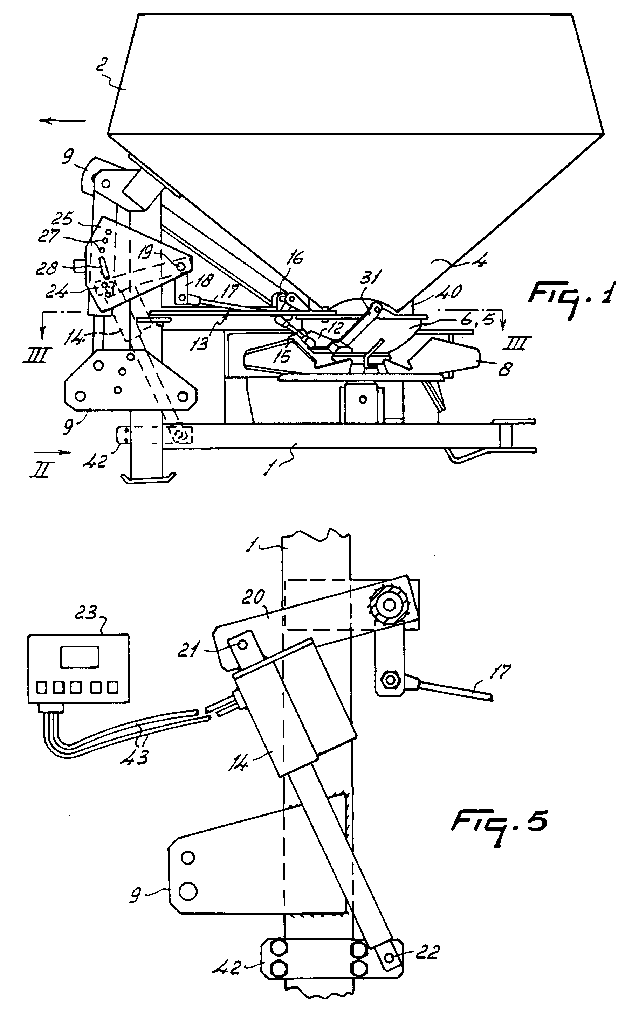

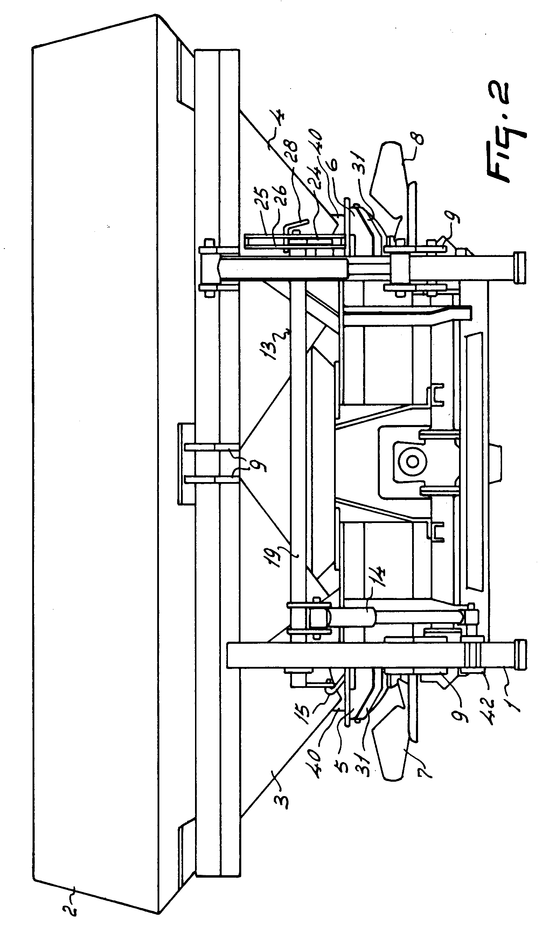

During operation, the implement shown in Figures 1 to 5 is moved in order to spread material over a surface area to be provided with material. During travel, material is spread over a strip of soil of a predetermined width. The implement is particularly suitable for spreading material over agricultural fields. One usually wants to distribute the material to be spread, such as fertilizer, in a predetermined quantity per surface unit over the surface area to be spread. To achieve this, depending on the width over which the material is spread and depending on the rate of travel of the implement over the surface, the material is supplied in a given quantity per unit of time from the hopper 2 via the discharge apertures 10 and 11 to the spreader members 7 and 8. So as to be able to discharge the material during operation in the desired quantity per unit of time from the hopper 2 via the discharge apertures 10 and 11, the free size of passage of the discharge apertures 10 and 11 can be set by means of the dosing slide 12. The quantity of material to be spread per surface unit may vary because of e.g. the soil and/or crop conditions, the type of material to be spread, or because of further circumstances.

In order to obtain a desired size of passage, the dosing slide has to be adjusted to the proper position relative to the discharge apertures, which position must be in relation to the position of the arm 24 relative to the plate 25. To that end, prior to the spreading of the material, the proper setting of the dosing slide 12 relative to the discharge apertures 10 and 11 and that of the stop arm 24 along the plate 25 must be determined. During this adjusting operation, the adjusting member 14 is uncoupled from the arm 20. To accomplish this setting, the stop pin 28 is inserted through a predetermined aperture 27 (as specified in the manual issued by the manufacturer). Subsequently, the stop arm 24 is placed against the stop pin 28. In the embodiment, the dosing slide 12 must then be in such a position that its lower edge coincides exactly with the tips of the tongues 29 and 30. If this is not the case, it can as yet be obtained by adjusting the length of the relevant length-adjustable arm 15, and/or that of the arms 17. Moreover, the dosing slide 12 can be moved by adjustment around the axis of the bolt shafts 32 in order to achieve a correct position relative to the discharge apertures 10 and 11.

Thereafter, the adjusting member 14 can be coupled to the arm 20. However, before doing so, the adjusting member must be set to a zero-position. The zero-position is a position wherein the length-adjustable adjusting member has its shortest length. In the embodiment, the adjusting member is an electrically controllable member, which adjusting member includes a cylindrical housing wherein a rod can be moved longitudinally by means of an electric motor constituting part of the adjusting member. This zero position can be obtained by means of a signal supplied by the computer 23, for which an operator must give a command to the computer 23. This signal from the computer starts the electric motor, i.e. in such a manner that the rod is withdrawn as far as possible into the housing, so that the adjusting member 14 gets its shortest length. The duration of driving the rod by the electric motor has been chosen such that a maximum withdrawal of the rod into the housing is ensured. The adjusting member includes a potentiometer which in co-operation with the rod is set to the zero position when the rod is in the zero position. By recording the data in the computer, the zero position of the adjusting member is laid down. Thereafter, the adjusting member 14 can be coupled to the arm 20.

The arm 20 must previously have been adjusted to its zero position. This zero position corresponds to the position of the dosing slide relative to the discharge apertures, i.e. in such a manner that the discharge apertures are closed completely. In case it should appear that the end of the adjusting member 14 to be coupled to the arm 20 is located near the arm 20, then the length of the adjusting member 14 can be adjusted slightly and/or the clamping member 42 can be adjusted with respect to the frame beam. When the adjusting member 14 has been connected to the arm 20, then this action can be confirmed by pressing a key of the computer 23.

In the memory of the computer 23 there is present a program which checks whether the mechanical graduation constituted by the apertures 27 in the plate 25 agrees with the graduation stored in the computer. The extreme values of these graduations correspond to the positions wherein the dosing slide 12 fully closes, respectively fully opens, the discharge apertures 10 and 11. In order to check whether the mechanical graduation agrees with the graduation stored in the computer memory, the stop pin 28 must be inserted into a specific one of the apertures 27 of the graduation on the implement, which specific aperture was displayed by the computer 23. The stop arm 24 must be moved to the stop pin 28 by an operator operating the computer keyboard. As soon as the stop pin 28 has been reached, the operator must press a key of the computer 23, in response to which the position of the stop arm 24 is stored in the memory of the computer 23. Thereafter, following the instruction displayed by the computer, the stop pin 28 must be inserted into a specific one of the apertures 27. The stop arm 24 must then again be moved up to the stop pin 28 by the operator and thereafter, by pressing a key of the computer keyboard, this position is stored in the memory of the computer 23. In the said last position of the stop pin 28, the discharge apertures 10 and 11 are opened to their full extent.

With a view to the play in the adjusting mechanism, caused inter alia by a fit which is not 100% accurate or wear of e.g. the coupling points of the coupling arms 15, 17, it is important that the reference points constituted by the stop pin 28 are always approached from the same direction of movement. In the above-described procedure, this means that the adjusting member 14 is adjusted from its fully withdrawn position into the direction of its fully extended position. Any possible play in the adjusting mechanism is compensated for during the initial adjustment of the adjusting member 14, in the sense that the rod of the adjusting member 14 is moved out by the electric motor associated with the adjusting member 14, as a consequence of which the clearance in the adjusting mechanism is "pushed away" in the initial part of this outward movement of the rod, so that, on reaching the first reference point and subsequent adjustment again of the adjusting member, the play does no longer affect the setting of the dosing slide 12 in the initial direction of movement of the adjusting member rod.

The computer 23 calculates a ratio from the two reference points formed by the stop pin 28. Using the calculated ratio, the graduation stored in the computer 23 is adapted to the mechanically adjustable graduation provided on the implement.

When the implement is operative, a predetermined dose of material must be distributed as uniformly as possible. The mass flow to be realized in this connection depends inter alia on the rate of travel of the implement. A rate of travel-dependent dosing can be effected by means of the computer 23 and the adjusting member 14. This means that, with a higher rate of travel, the dosing aperture must be increased automatically. When the rate of travel is lower, the dosing aperture must be decreased. The relation between the mass flow from the discharge apertures 10 and 11, respectively, and the extent to which the dosing slide covers the discharge apertures 10 and 11, is stored in the memory of the computer 23. This relation corresponds to the apertures 27 provided in plate 25, which likewise correspond to a given mass flow from the discharge apertures 10 and 11.

A change in the mass flow requires an adjustment of the arm 20 through a certain angle by means of the adjusting member 14. The length of the adjusting member 14 then increases (the spindle moves outwardly) or decreases (the spindle moves inwardly). In the case that the spindle is moved outwardly, this means for the embodiment that the adjusting member 14 is moved in the calibration direction and, consequently, that at that moment the play does not affect the adjusting mechanism and, concurrently, the setting of the dosing slide relative to the discharge apertures 10 and 11. When the spindle moves inwardly, due to play in the adjusting mechanism, the initial movement of the arm 20 will not result in a displacement of the dosing slide 12. Not until after the play has been bridged by the spindle, the coupling member 13 will transfer the spindle adjustment to the dosing slide 12, resulting in a change in the mass flow. This would mean that, should the play not previously have been taken into account, the desired dosing slide setting will not be achieved and the dosing slide will then lag behind the adjusting member, which has for its consequence that the discharge apertures 10 and 11 will not be closed to a sufficient extent by the dosing slide 12. In order to prevent this, in this embodiment, a value representing the maximum allowable play is stored in the memory of the computer 23. The maximum allowable play can be determined by checking, in actual practice, the amount of play in the adjusting mechanism after a given number of operating hours of the implement. It is, of course, also possible to store in the computer memory the relation between the number of operating hours and the anticipated play in the adjusting mechanism. This renders it possible to adapt the maximum allowable play according as the number of operating hours increases. In the implement of the above-described type, this value amounts to approximately 5 mms. When the adjusting member 14 is adjusted, this value, when the spindle is withdrawn, will be added to the path to be covered by the adjusting member and ensuring from the desired setting. Depending on the play in the adjusting mechanism, the dosing slide will at that instant close the discharge apertures 10 and 11 slightly too far. The computer 23 now causes the length of the adjusting member 14 to increase, i.e. the spindle must now be moved outwardly through 5 mms, the maximum allowable play. The result will be that the initial movement of the spindle will not have any influence on the setting of the dosing slide 12, the play in the adjusting mechanism being the cause thereof, albeit now in the other direction. The last part of the movement of the spindle results in a play-free drive of the dosing slide 12 by the adjusting mechanism, which can thus adjust the desired mass flow. Since the adjustment by means of the closing member occurs rather quickly, the desired setting is obtained rapidly and a slight over-closure of the dosing aperture will hardly have any influence on the desired mass flow.

It will be obvious that a setting of the desired size of the discharge aperture achieved in the above-described manner can alternatively be achieved by manual adjustment of the arm 20. For that purpose there might be present on the arm 20 an indication representing the maximum allowable play. It will then not be possible to adjust the desired size of the discharge aperture with such a great accuracy, ease of operation and speed as with the computer-controlled adjusting member 14.

## Claims

1. An implement for dosing material, such as liquid, granular and/or pulverulent material, which implement comprises at least one hopper (2) for the material to be dosed, which hopper (2) includes a discharge aperture (10, 11) with associated closing member (12) by means of which the discharge aperture (10, 11) can be opened to a greater or lesser extent, as well as an adjusting mechanism for setting the size of the discharge aperture (10, 11), the adjusting mechanism comprising a rod system (15, 17, 18, 20), connected to the closing member (12), an adjusting member (14) controlling said rod system (15, 17, 18, 20) and means for providing that the play in the adjusting mechanism does not affect the setting of the size of the discharge aperture (10, 11), characterized in that said means are provided with a control member (23) which, in response to a desired size of the discharge aperture (10, 11), causes the length of the adjusting member (14) to be changed in order to bring the closing member (12) in a position wherein the size of the discharge aperture (10, 11) corresponds with the desired size thereof, whereby, when the change of length is performed in a first direction without changing said direction no compensation of the play in the adjusting mechanism takes place and, when the change of length is performed in a second, opposite direction, the length adjustment in said opposite direction is enlarged with a predetermined value, greater than or at least equal to the maximum allowable play in the adjusting mechanism, followed by a length adjustment in the first direction corresponding with said predetermined value.

2. An implement as claimed in claim 1, characterized in that the value indicating the maximum allowable play is fed into the control member (23).

3. An implement as claimed in claim 1 or 2, characterized in that in the control member (23) there is stored the relation between the number of operating hours and the anticipated play in the adjusting mechanism, whereby on basis of this relation the control member (23) adapts the maximum allowable play value according to the number of operating hours.

4. An implement as claimed in claim 1, 2 or 3, characterized in that the maximum allowable play is 5 mms.

5. An implement as claimed in any one of the preceding claims, characterized in that the control member (23) includes a computer with a memory that contains reference points, with the aid of which the computer (23) calculates a ratio, in order that a graduation present in the computer memory for the size of the discharge aperture (10, 11) to be set agrees with a graduation present on the implement and to be adjusted mechanically.

6. An implement as claimed in claim 5, characterized in that the memory contains a first reference point which corresponds to a position on the graduation for setting the size of the discharge aperture (10, 11), in which position the closing member (12) is located on an edge of the discharge aperture (10, 11), the discharge aperture (10, 11) being closed completely.

7. An implement as claimed in claim 6, characterized in that the memory contains a second reference point which corresponds to a graduation position, in which the closing member (12) is located on an edge of the discharge aperture (10, 11), the discharge aperture (10, 11) being open to its full extent.

8. An implement as claimed in claim 7, characterized in that the memory contains a third reference point which corresponds to a graduation position located between the first and the second reference point.

9. An implement as claimed in claim 8, characterized in that the ratio is determined on the basis of the second and third reference points.

10. An implement as claimed in claim 9, characterized in that, for the determination of the ratio, the second and third reference points must be approached from the direction of the first reference point, which direction corresponds to the said predetermined direction of movement.

## Patentansprüche

1. Gerät zum Dosieren von Gut, wie z. B. von flüssigem, körnigem und/oder pulverigem Gut, mit mindestens einem Vorratsbehälter (2) für das zu dosierende Gut, der eine Auslaßöffnung (10, 11) mit zugeordnetem Verschlußglied (12) aufweist, mittels dessen die Durchlaßgröße der Auslaßöffnung (10, 11) veränderbar ist, sowie eine Stellvorrichtung zum Einstellen der Durchlaßgröße der Auslaßöffnung (10, 11), wobei die Stellvorrichtung ein mit dem Verschlußglied (12) verbundenes Gestänge (15, 17, 18, 20), ein Stellglied (14) zur Steuerung des Gestänges (15, 17, 18, 20) sowie eine Vorrichtung aufweist, die verhindert, daß das in der Stellvorrichtung vorhandene Spiel die Einstellung der Durchlaßgröße der Auslaßöffnung (10, 11) beeinträchtigt,
dadurch gekennzeichnet, daß die Vorrichtung eine Steuerung (23) aufweist, die bewirkt, daß die Länge des Stellgliedes (14) entsprechend einer gewünschten Durchlaßgröße der Auslaßöffnung (10, 11) verändert wird, um das Verschlußglied (12) in eine Position zu bewegen, in der die gewünschte Durchlaßgröße der Auslaßöffnung (10, 11) gegeben ist, wobei keine Kompensation des in der Stellvorrichtung vorhandenen Spiels eintritt, wenn die Länge in einer ersten Richtung ohne Änderung dieser Richtung verändert wird, und bei Längenänderung in einer zweiten entgegengesetzten Richtung die Längenverstellung in dieser entgegengesetzten Richtung um einen vorgegebenen Wert erhöht wird, der größer als oder zumindest gleich groß ist wie das größte zulässige Spiel in der Stellvorrichtung, gefolat von einer dem vorgegebenen Wert entsprechenden Längeneinstellung in der ersten Richtung.

2. Gerät nach Anspruch 1,
dadurch gekennzeichnet, daß der dem größten zulässigen Spiel entsprechende Wert in die Steuerung (23) eingegeben wird.

3. Gerät nach den Ansprüchen 1 oder 2,
dadurch gekennzeichnet, daß in der Steuerung (23) die Relation zwischen der Anzahl der Betriebsstunden und dem voraussichtlichen Spiel in der Stellvorrichtung gespeichert ist, wobei die Steuerung (23) auf der Basis dieser Relation den Wert des größten zulässigen Spiels an die Anzahl der Betriebsstunden anpaßt.

4. Gerät nach den Ansprüchen 1, 2 oder 3,
dadurch gekennzeichnet, daß das größte zulässige Spiel 5 mm beträgt.

5. Gerät nach einem der vorhergehenden Ansprüche,
dadurch gekennzeichnet, daß die Steuerung (23) einen Computer mit einem Speicher aufweist, der Referenzpunkte enthält, mittels derer der Computer (23) ein Verhältnis errechnet, derart, daß eine in dem Computerspeicher vorhandene Gradeinteilung bezüglich der einzustellenden Durchlaßgröße der Auslaßöffnung (10, 11) mit einer an dem Gerät befindlichen Gradeinteilung zur mechanischen Einstellung übereinstimmt.

6. Gerät nach Anspruch 5,
dadurch gekennzeichnet, daß der Speicher einen ersten Referenzpunkt enthält, der einer Position auf der Gradeinteilung zum Einstellen der Durchlaßgröße der Auslaßöffnung (10, 11) entspricht, in der das Verschlußglied (12) an einem Rand der Auslaßöffnung (10, 11) positioniert und die Auslaßöffnung (10, 11) vollständig geschlossen ist.

7. Gerät nach Anspruch 6,
dadurch gekennzeichnet, daß der Speicher einen zweiten Referenzpunkt enthält, der einer Position auf der Gradeinteilung entspricht, in der das Verschlußglied (12) an einem Rand der Auslaßöffnung (10, 11) positioniert und die Auslaßöffnung (10, 11) vollständig geöffnet ist.

8. Gerät nach Anspruch 7,
dadurch gekennzeichnet, daß der Speicher einen dritten Referenzpunkt enthält, der einer Position auf der Gradeinteilung zwischen dem ersten und dem zweiten Referenzpunkt entspricht.

9. Gerät nach Anspruch 8,
dadurch gekennzeichnet, daß das Verhältnis auf der Basis des zweiten und des dritten Referenzpunktes bestimmt wird.

10. Gerät nach Anspruch 9,
dadurch gekennzeichnet, daß zur Bestimmung des Verhältnisses der zweite und der dritte Referenzpunkt aus der Richtung des ersten Referenzpunktes erreicht werden muß, wobei diese Richtung der vorgegebenen Bewegungsrichtung entspricht.

## Revendications

1. Appareil pour le dosage de matière, telle qu'un liquide ou une matière granulaire et/ou pulvérulente, lequel appareil comprend au moins une trémie (2) pour la matière à doser, laquelle trémie (2) comporte une ouverture de décharge (10, 11) avec un organe obturateur associé (12) au moyen duquel l'ouverture de décharge (10, 11) peut être ouverte dans une mesure plus ou moins grande, ainsi qu'un mécanisme de réglage pour régler la taille de l'ouverture de décharge (10, 11), le mécanisme de réglage comprenant un système de tringles (15, 17, 18, 20) relié à l'organe obturateur (12) un organe de réglage (14) commandant ledit système de tringles (15, 17, 18, 20) et des moyens pour assurer que le jeu dans le mécanisme de réglage n'affecte pas le réglage de la taille de l'ouverture de décharge (10, 11),
**caractérisé** en ce que lesdits moyens sont munis d'un organe de commande (23) qui provoque, en réponse à une taille désirée de l'ouverture de décharge (10, 11), un changement de la longueur de l'organe de réglage (14) afin d'amener l'organe obturateur (12) en un position dans laquelle la taille de l'ouverture de décharge (10, 11) correspond à la taille désirée de celle-ci, en faisant que, quand le changement de longueur est exécuté dans une première direction sans changer ladite direction, il ne se produit pas de compensation du jeu dans le mécanisme de réglage et, quand le changement de longueur est exécuté dans une deuxième direction opposée, le réglage de longueur dans ladite direction opposée est augmenté d'une valeur prédéterminée, plus grande que, ou au moins égale au jeu maximum admissible dans le mécanisme de réglage, ceci étant suivi par un réglage de longueur dans la première direction correspondant à ladite valeur prédéterminée.

2. Appareil selon la revendication 1, caractérisé en ce que la valeur indiquant le jeu maximum admissible est introduite dans l'organe de commande (23).

3. Appareil selon la revendication 1 ou 2, caractérisé par la mise en mémoire dans l'organe de commande (23) de la relation entre le nombre d'heures de fonctionnement et le jeu prévisible dans le mécanisme de réglage, ce qui permet à l'organe de commande (23) d'adapter, en fonction de cette relation, la valeur du jeu maximum admissible, selon le nombre d'heures de fonctionnement.

4. Appareil selon la revendication 1, 2 ou 3, caractérisé en ce que le jeu maximum admissible est de 5 millimètres.

5. Appareil selon l'une quelconque des revendications précédentes, caractérisé en ce que l'organe de commande (23) comporte un ordinateur avec une mémoire contenant des points de référence, à l'aide desquels l'ordinateur (23) calcule un rapport afin qu'une graduation présente dans la mémoire de l'ordinateur pour la taille de l'ouverture de décharge (10, 11) devant être réglée concorde avec une graduation présente sur l'appareil et devant être réglée mécaniquement.

6. Appareil selon la revendication 5, caractérisé en ce que la mémoire contient un premier point de référence qui correspond à une position sur la graduation pour régler la taille de l'ouverture de décharge (10, 11), dans laquelle position l'organe obturateur (12) est situé sur un bord de l'ouverture de décharge (10, 11), l'ouverture de décharge (10, 11) étant complètement fermée.

7. Appareil selon la revendication 6, caractérisé en ce que la mémoire contient un deuxième point de référence qui correspond à une position sur la graduation dans laquelle l'organe obturateur (12) est situé sur un bord de l'ouverture de décharge (10, 11), l'ouverture de décharge (10, 11) étant complètement ouverte.

8. Appareil selon la revendication 7, caractérisé en ce que la mémoire contient un troisième point de référence qui correspond à une position sur la graduation situé entre le premier et le deuxième points de référence.

9. Appareil selon la revendication 8, caractérisé en ce que le rapport est déterminé d'après le deuxième et le troisième points de référence.

10. Appareil selon la revendication 9, caractérisé en ce que, pour la détermination du rapport, le deuxième et le troisième points de référence doivent être abordés à partir de la direction du premier point de référence, laquelle direction correspond à ladite direction de mouvement prédéterminée.
